# EUROPEAN PATENT SPECIFICATION

(11) **EP 2 909 254 B1**
(45) Date of publication and mention of the grant of the patent: **21.12.2016**
(21) Application number: 14715643.4
(22) Date of filing: 08.04.2014
(51) Int. Cl.: C08H 1/06, C08J 3/12, C08L 89/06

(54) **COLLAGEN POWDER AND PROCESS FOR ITS MANUFACTURE**
KOLLAGENPULVER UND VERFAHREN ZU DESSEN HERSTELLUNG
POUDRE DE COLLAGÈNE ET PROCÉDÉ POUR SA PRÉPARATION

(30) Priority: 08.04.2013 EP 13162799; 08.04.2013 US 201313858382
(43) Date of publication of application: 26.08.2015
(73) Proprietor: Innocoll Pharmaceuticals Limited, Althone Roscommon (IE)
(72) Inventor: DIETRICH, Alexandra, 93342 Saal/Donau (DE); SCHNEID, Stefan, 93342 Saal/Donau (DE); MYERS, Michael, Ashburn, Virginia 20148 (US)
(74) Representative: Stephen, Robert John
(86) International application number: PCT/EP2014/057091
(87) International publication number: WO 2014/166966

(56) References cited:
- WO-A1-2011/139228
- GB-A- 2 147 299
- US-A- 4 412 947
- US-A- 5 196 185

## Description

### Field of the Invention

The present invention relates to a collagen powder, a method of manufacture thereof, and uses thereof.

### Background to the Invention

Processes for the preparation of collagen-based powders for use in human and veterinary medicine are well known in the art. One important performance characteristic of collagen powders is the ability to absorb fluids, such as blood and/or wound exudate. Given that collagen powders often show low density, optimized processing characteristics are also of paramount importance.

Commonly, the collagen used for subsequent preparation of the collagen-based powders is first isolated by extraction from mammalian hide or tendon, purified, enzymatically-treated to remove non-helical telopeptides, partially solubilised with acid, and finally precipitated by increasing the pH to provide a source of purified, fibrillar collagen. Once isolated, the collagen source may be further processed for the manufacture of collagen-based materials immediately, or is otherwise stored while waiting further processing. For storage convenience at commercial scale, the collagen source is normally concentrated by removal of water using centrifugation to reduce bulk and thereby create a wet mass. The wet mass must be stored frozen to preserve the collagen and prevent bacterial growth. When needed for manufacture of collagen-based powders, the frozen collagen wet mass is typically thawed and redispersed. Whether the isolated collagen is used immediately or frozen and thawed as a wet mass, the collagen source is generally viscous and difficult to process at commercial scale into collagen-based powders.

It is known to prepare collagen powders by milling pre-formed collagen sponge products. Disadvantageously, this known method results in collagen powders having low density. Moreover, a large number of collagen sponges must be formed in order to prepare a sufficient amount of collagen powder, which makes the collagen powder preparation process inefficient, particularly given that the amount of water that needs to be removed during the preparation process can be approximately 200-fold greater than the equivalent dry mass of the collagen source. In addition, the resulting collagen powder is difficult to further process because it exhibits undesirable processing characteristics, such as poor flow behaviour and high electrostatic charge properties. These material properties also lead to difficulties in the application of the resulting collagen powder, for example, for use in woundcare or implantation. Due to the low density of the resulting collagen powder, it can easily be blown away by minor air movements and adheres to surfaces, which can complicate placement of the collagen powder at the site of application.

There is a need to provide a collagen powder having desirable product characteristics, such as high fluid absorption capacity, while also having processing characteristics that allow commercial manufacturing and handling of the collagen powder.

### Summary of the Invention

According to a first aspect of the present invention, there is provided a process for preparing a collagen powder, the process comprising the steps of:
(a) providing a collagen source;
(b) adjusting the collagen source to a concentration of 1.5 - 4.0%;
(c) adjusting the collagen source to a pH of 2.9 - 5.2 by introducing a carboxylic acid to the collagen source;
(d) freezing the collagen source to a temperature of -33°C to -42°C;
(e) dehydrating the frozen collagen, comprising removing the aqueous phase by reducing the pressure to 5 Pa to 100 Pa (0.05 mbar to 1 mbar); and
(f) degrading the dehydrated collagen to a powder.

Optionally, the concentration-adjusting step (b) is performed prior to the pH-adjusting step (c). Alternatively, the pH-adjusting step (c) is performed prior to the concentration-adjusting step (b). Further alternatively, the concentration-adjusting step (b) and the pH-adjusting step (c) are performed simultaneously.

Optionally, the collagen source in the providing step (a) is fibrillar collagen. Further optionally, the collagen source in the providing step (a) is selected from Type I collagen, Type II collagen, Type III collagen, and a mixture thereof. Still further optionally, the collagen source in the providing step (a) is Type I collagen.

Optionally, the collagen source in the providing step (a) has a collagen concentration of greater than 4.0%. Further optionally, the collagen source in the providing step (a) has a collagen concentration of greater than 15.0%. Still further optionally, the collagen source in the providing step (a) has a collagen concentration of greater than 30.0%.

Optionally, the collagen source in the providing step (a) has a pH greater than 5.0. Further optionally, the collagen source in the providing step (a) has a collagen concentration of 7.0. Still further optionally, the collagen source in the providing step (a) has a collagen concentration of greater than 7.0.

Optionally, the process comprises the additional step of mechanically degrading the collagen source prior to the freezing step (d). Further optionally, the process comprises the additional step of homogenising the collagen source prior to the freezing step (d). Still further optionally, the process comprises the additional step of shear mixing the collagen source prior to the freezing step (d).

Optionally, the additional mechanical degrading step is conducted after the concentration-adjusting step (b) and/or the pH-adjusting step (c); and prior to the freezing step (d).

Optionally, the additional mechanical degrading step is conducted for a period of more than 5 seconds. Further optionally, the additional mechanical degrading step is conducted for a period of 5 - 900 seconds. Still further optionally, the additional mechanical degrading step is conducted for a period of 5 - 900 seconds until a homogenous collagen dispersion is formed.

Optionally, the concentration-adjusting step (b) comprises introducing a fluid to the collagen source. Further optionally, the concentration-adjusting step (b) comprises introducing an aqueous fluid to the collagen source. Still further optionally, concentration-adjusting step (b) comprises introducing water, optionally purified water, to the collagen source.

Optionally, the collagen source is adjusted to an equivalent concentration of 1.5 - 4.0% (w/w) dry collagen. Further optionally, the collagen source is adjusted to an equivalent concentration of 2.0 - 3.5% (w/w) dry collagen. Still further optionally, the collagen source is adjusted to an equivalent concentration of 3.0% (w/w) dry collagen.

Optionally, the process comprises the step (c) of adjusting the collagen source to a pH of 3.5 - 5.0.

Optionally, the process comprises the step (c) of adjusting the collagen source to a pH of less than 4.5. Further optionally, the process comprises the step (c) of adjusting the collagen source to a pH of 3.5 - 4.3. Still further optionally, the process comprises the step (c) of adjusting the collagen source to a pH of 3.5.

Optionally, the process comprises the step (c) of adjusting the collagen source to a pH of 3.8 - 4.3. Still further optionally, the process comprises the step (c) of adjusting the collagen source to a pH of 4.0.

The pH-adjusting step (c) comprises introducing an acid to the collagen source. Further optionally, the pH-adjusting step (c) comprises introducing an acid solution to the collagen source. Still further optionally, the pH-adjusting step (c) comprises introducing an aqueous acid solution to the collagen source.

The pH-adjusting step (c) comprises introducing a carboxylic acid to the collagen source. Further optionally, the pH-adjusting step (c) comprises introducing a carboxylic acid solution to the collagen source. Still further optionally, the pH-adjusting step (c) comprises introducing an aqueous carboxylic acid solution to the collagen source.

Optionally, the pH-adjusting step (c) comprises introducing acetic acid to the collagen source. Further optionally, the pH-adjusting step (c) comprises introducing an acetic acid solution to the collagen source. Still further optionally, the pH-adjusting step (c) comprises introducing an aqueous acetic acid solution to the collagen source.

Optionally, the pH-adjusting step (c) comprises introducing anhydrous acetic acid to the collagen source.

Optionally, the concentration-adjusting step (b) and the pH-adjusting step (c) can be conducted simultaneously by introducing an acid solution, optionally an aqueous acid solution, to the collagen source.

Optionally, the concentration-adjusting step (b) and the pH-adjusting step (c) can be conducted simultaneously by introducing an acetic acid solution, optionally an aqueous acetic acid solution, to the collagen source.

Optionally, the concentration-adjusting step (b) is conducted for a period of not less than 0.5 hours. Further optionally, the concentration-adjusting step (b) is conducted for a period of 0.5 hours. Optionally, the pH-adjusting step (c) is conducted for a period of 1-180 minutes.

Optionally, the concentration-adjusting step (b) and the pH-adjusting step (c) are conducted simultaneously for a period of more than 1 minute. Further optionally, the concentration-adjusting step (b) and the pH-adjusting step (c) are conducted simultaneously for a period of 1 - 180 minutes. The freezing step (d) comprises freezing to a temperature of about -33°C to about -42°C. Further optionally, the freezing step (d) comprises freezing to a temperature of about -38°C. Still further optionally, the freezing step (d) comprises freezing at a rate of about 0.3°C to about 1.5°C per minute, optionally a rate of about 0.5°C per minute.

The dehydrating step (e) comprises removing the aqueous phase by reducing the pressure to about 5 Pa to 100 Pa (0.05 to about 1 mbar). Still further optionally, the dehydrating step (e) comprises removing the aqueous phase by applying at least a partial vacuum, optionally by applying a vacuum.

Optionally or additionally, the dehydrating step (e) comprises increasing the temperature. Further optionally or additionally, the dehydrating step (e) comprises increasing the temperature under vacuum or partial vacuum. Still further optionally or additionally, the dehydrating step (e) comprises increasing the temperature to at least +30°C. Still further optionally or additionally, the dehydrating step (e) comprises increasing the temperature to at least +30°C under vacuum or partial vacuum. Still further optionally or additionally, the dehydrating step (e) comprises increasing the temperature to at least +40°C. Still further optionally or additionally, the dehydrating step (e) comprises increasing the temperature to at least +40°C under vacuum or partial vacuum.

Optionally or additionally, the dehydrating step (e) comprises increasing the temperature to about +30°C at a rate of about 0.3°C to about 1.5°C per minute, further optionally at a rate of about 0.5°C per minute. Further optionally or additionally, the dehydrating step (e) comprises increasing the temperature of the collagen to about +30°C at a rate of about 0.3°C to about 1 .5°C per minute, further optionally at a rate of about 0.5°C per minute, under vacuum or partial vacuum.

Optionally or additionally, the dehydrating step (e) comprises increasing the temperature to about +40°C at a rate of about 0.3°C to about 1.5°C per minute, further optionally at a rate of about 0.5°C per minute. Further optionally or additionally, the dehydrating step (e) comprises increasing the temperature of the collagen to about +40°C at a rate of about 0.3°C to about 1 .5°C per minute, further optionally at a rate of about 0.5°C per minute, under vacuum or partial vacuum.

Optionally, the dehydrating step (e) comprises at least one equilibrating step. Optionally, the at least one equilibrating step comprises maintaining the temperature at a constant temperature, sufficient to allow the frozen collagen to reach a desired temperature. Further optionally, the at least one equilibrating step comprises maintaining the temperature at a constant temperature for a sufficient period of time to allow the frozen collagen to reach a desired temperature. Still further optionally, the at least one equilibrating step comprises maintaining the temperature at a constant temperature for at least 10mins, optionally at least 20mins, further optionally at least 30mins, still further optionally at least 45mins, still further optionally at least 60mins; to allow the frozen collagen to reach a desired temperature.

Optionally, the at least one equilibrating step is conducted when the temperature is increased to at least -20°C. Optionally or additionally, the at least one equilibrating step is conducted when the temperature is increased to at least -10°C. Optionally or additionally, the at least one equilibrating step is conducted when the temperature is increased to at least 0°C. Optionally or additionally, the at least one equilibrating step is conducted when the temperature is increased to at least +10°C. Optionally or additionally, the at least one equilibrating step is conducted when the temperature is increased to at least +20°C. Optionally or additionally, the at least one equilibrating step is conducted when the temperature is increased to at least +30°C. Optionally or additionally, the at least one equilibrating step is conducted when the temperature is increased to at least +40°C.

Optionally, the dehydrating step (e) comprises six equilibrating steps, each equilibrating step being conducted when the temperature is increased by about 10°C. Further optionally, the dehydrating step (e) comprises six equilibrating steps, each equilibrating step being conducted when the temperature is increased to about -20°C, about -10°C, about 0°C, about +10°C, about +20°C, and about +30°C.

Optionally, the collagen source can be formed into collagen layers prior to the freezing step (d).

Optionally, the collagen dispersion can be filled into moulds to form collagen layers prior to the freezing step (d). Further optionally, the collagen dispersion can be filled into moulds to form collagen layers having an average thickness of 1-5mm prior to the freezing step (d). Still further optionally, the collagen dispersion can be filled into moulds to form collagen layers having an average thickness of 1-3mm prior to the freezing step (d). Still further optionally, the collagen dispersion can be filled into moulds having an average thickness of 1-5mm and dimensions of 50 x 40 cm to form collagen layers prior to either or both of the freezing step (d) and the dehydrating step (e).

Optionally, the degrading step (f) comprises mechanically degrading the dehydrated collagen to a powder. Further optionally, the degrading step (f) is selected from milling, cutting, grinding, granulating, and a mixture thereof. Still further optionally, the degrading step (f) comprises milling the dehydrated collagen to a powder. Still further optionally, the degrading step (f) comprises milling the dehydrated collagen to a powder using a mesh size of 1mm.

Optionally, the collagen powder is filled into a container.

Optionally, the collagen powder is sterilized. Further optionally, the collagen powder is sterilized after being filled into a container.

### Brief Description of the Drawings

Embodiments of the invention will now be described by way of non-limiting examples, and with reference to the accompanying drawings, in which:
**Figure 1** is a graph illustrating water uptake of collagen powders prepared at different pH and collagen concentrations;
**Figure 2** is a graph illustrating bulk density of collagen powders prepared at different pH and collagen concentrations;

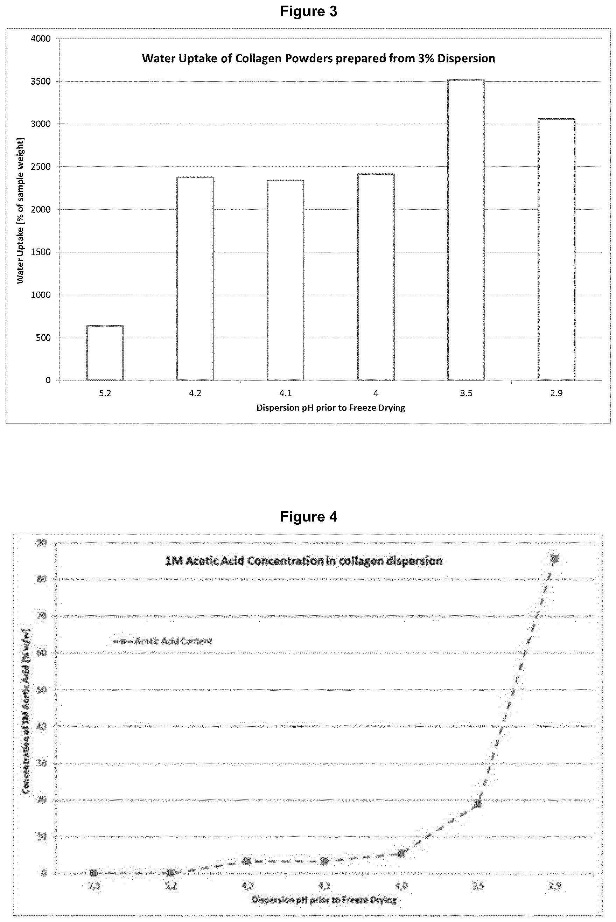

**Figure 3** is a graph illustrating water uptake of collagen powders prepared at different pH; and
**Figure 4** is a graph illustrating the concentration of acid introduced to the collagen source during the pH-adjusting step (c).

### Examples

### Example 1 - Manufacturing Process

Collagen can be isolated from a number of sources, for example, animal hides and animal tendons. In a preferred embodiment, the collagen is isolated from animal tendon, for example equine or bovine tendon; although any known source of collagen, including fibrous tissue, optionally connective tissue, may be used and selected by one skilled in the art. Preferably, the collagen is isolated from equine tendon. In the method of isolation, equine tendons were milled to degrade the collagen source. The milled equine tendons were treated with a number of reagents, including 1 N sodium hydroxide (NaOH) to remove microbiological contamination such as prions at the beginning of the process. Treatment steps with hydrogen peroxide and washing steps at different pH values were conducted, followed by a milling step, which was used to increase the surface for the next treatment step. The molecular weight of the collagen source was additionally reduced by treatment with the proteolytic enzyme pepsin at an approximate pH of 2.5. The pH was adjusted using an aqueous solution of 1 N HCl. The pepsin was used to degrade contaminating serum components such as equine serum albumin (ESA) and resulted in the detachment of non-helical portions of the collagen molecule (telopeptides). During this process, the collagen material was also partially solubilised in the acidic medium. After filtration, the pH level was increased from 2.5 to 7.5 by addition of 1 N sodium hydroxide (NaOH). This pH adjustment resulted in precipitation of the fibrillar collagen out of solution, which was then concentrated by means of centrifugation to provide a collagen dispersion having a concentration of about 3-30% (w/w). The resulting material was designated fresh collagen. The fresh collagen can be processed in several ways.

The fresh collagen can be packaged in suitable portions and frozen to -20°C to be stored in a freezer until required for use. The resulting material was designated frozen collagen. The frozen collagen is thawed prior to use in the same manner as fresh collagen.

An amount of 63.3 g of frozen collagen source having an equivalent concentration of 28.4% dry content was thawed to room temperature and provided in a suitably sized stainless steel container. An amount of 20 g of 1 N acetic acid was introduced to the collagen source to adjust the pH to 4.2. Purified water was introduced to the collagen dispersion to disperse the collagen source to a concentration of 1.5 - 4.0%.

After 5 minutes of soaking, a non-homogeneous semi-solid collagen dispersion was obtained and transferred into a cutting device (Heavy Duty Blender 39BL10, Waring Laboratory Services, Winsted, CT, USA). The collagen dispersion was homogenized for a short period of time (5 seconds to 15 minutes) until a uniform semi-solid collagen dispersion with homogeneously hydrated and swollen collagen was obtained. The viscous collagen dispersion was weighed in amounts of 280 g onto suitable moulds or trays, for example stainless steel trays or large blister moulds with a size of 32 x 22 cm, and distributed to obtain a collagen layer having a thickness of 1 - 5mm.

The distributed collagen dispersion was placed into a freeze dryer (Christ Epsilon I 15), where it was first frozen and then dehydrated under vacuum by sublimation. The freezing and dehydrating conditions include chamber pressures between 50 and 500 µbar, and shelf temperatures that start at about -40°C and are sequentially increased to +40°C. Typically, the freeze drying process (the freezing and dehydrating steps) has a total duration time of 18 - 30 hours. When the collagen is dehydrated, the freeze dryer chamber is brought to atmospheric pressure. The resultant collagen is in the form of collagen layers with slightly lower thickness than in the collagen dispersion layer (for example, the resultant collagen is in the form of collagen layers having a thickness of 1 - 4mm).

The collagen layers were cut using scissors to units with dimensions that allow suitable feeding into a mill (Retsch ZM 100), for example layers having dimensions 1 x 1 cm, or 10 x 10 cm, depending on the milling equipment. For the Retsch ZM 100 mill, the collagen layers were cut using scissors to layers having dimensions 0.5 x 0.5 cm. The cut collagen layers were collected in a stainless steel container and milled, for example using an ultracentrifugal mill (Retsch ZM 100 at 18000 rpm at room temperature) with a mesh size of 1 mm using air cooling. The degraded collagen powder is collected and filled into polyethylene (polythene; PE) containers or bags for intermediary storage.

Subsequently, the collagen powder was aliquoted into final packaging configuration of 5 g per unit, optionally sterilized using ethylene oxide (EO) gas, and tested as described in Example 3.

### Example 2 - Analytical Characterization (pH-adjusting step)

Collagen powder samples were prepared as generally described in Example 1. In short, an amount of frozen collagen source was thawed to room temperature. An amount of 1 N acetic acid was introduced to the collagen source to adjust the pH to a range of 2.9 - 7.3. Purified water was introduced to the collagen dispersion to disperse the collagen source to a concentration of 3.0%. The collagen dispersion was homogenized until a uniform semi-solid collagen dispersion with homogeneously hydrated and swollen collagen was obtained. The viscous collagen dispersion was weighed onto suitable moulds or trays and distributed to obtain a collagen layer. The distributed collagen dispersion was placed into a freeze dryer (Christ Epsilon I 15), where it was first frozen and then dehydrated under vacuum by sublimation. The resultant collagen is in the form of collagen layers. The collagen layers were cut using scissors, collected in a stainless steel container and milled. The degraded collagen powder is collected and filled into polyethylene (polythene; PE) containers or bags for intermediary storage.

### Example 3 - Analytical Characterization (Water Uptake)

Fluid absorption (water uptake) capacity of non-sterile collagen powder was tested by soaking a defined mass of 100 - 500 mg of collagen powder in purified water for a defined period of time (for example, 5 minutes); removing excess surface water by placing a sieve flat onto a tissue for 10 seconds and weighing the hydrated sample. The water uptake was analyzed under consideration of the pH and collagen concentration in the mixture prior to the freezing and dehydrating steps.

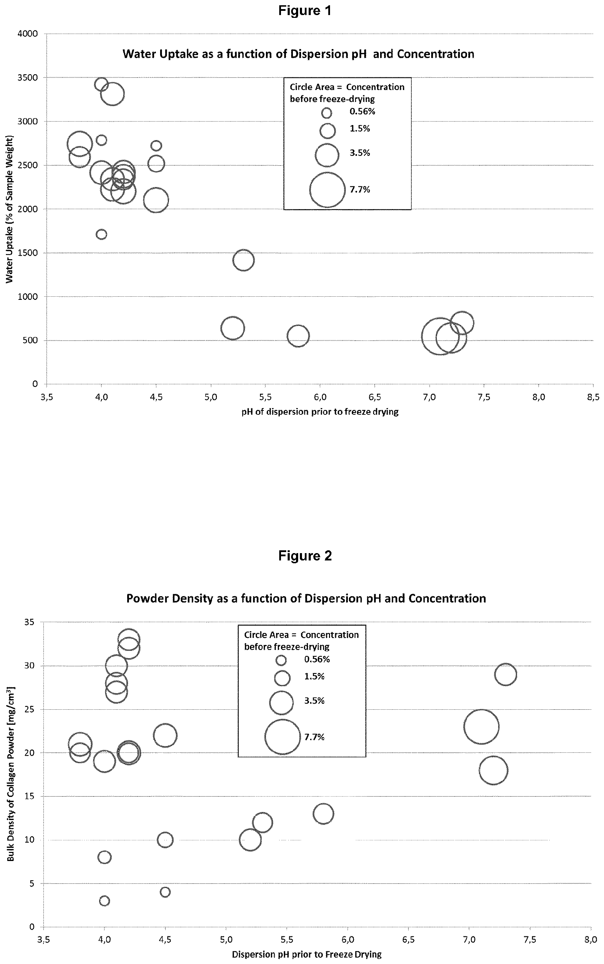

The pH of the collagen dispersion prior to the freezing and dehydrating steps strongly influenced the fluid absorption capacity. The water uptake is shown in Figure 1 in dependence of pH of the collagen dispersion prior to the freezing and dehydrating steps. The concentration of the collagen dispersion is indicated by the area of the circles. The collagen powder prepared by the process of the present invention is shown at pH 3.5 - 5.0 and having collagen concentrations of 1.5 - 5.0%. Collagen powders having a lower collagen concentration exhibited comparable water uptake, but poor processing characteristics. The water uptake properties appear to be primarily defined by the pH; and a pH of <4.5 appears to provide a water absorption value of at least 20-fold greater than the sample weight.

A direct comparative test was conducted between a collagen powder prepared by the process according to the present invention, and sterile samples of two commercially available products. In each case, the water uptake was determined using the method described herein above.

A microfibrillar collagen hemostat (MCH), indicated for all surgical procedures including neurosurgery and urology, available from Davol, a Bard Company (RI, USA), and known as Avitene™ Flour MCH; exhibited a water uptake of 6.5-fold greater than the sample weight tested.

A collagen powder made of sterile (gamma-irradiated), native, bioabsorbable bovine corium collagen, manufactured by Holphar Arzneimittel, von Fournier Pharma GmbH (Sulzbach, Germany) and known as PANGEN^{™} Puder exhibited a water uptake of 9.2-fold greater than the sample weight tested.

For both commercially-sourced products tested, the water uptake is significantly lower than for the collagen powder prepared according to the process of the present invention.

### Example 4 - Analytical Characterization (Bulk Density)

The bulk density of collagen powders was determined by filling a weighed amount of collagen powder (e.g. 1 g) into a graduated cylinder and determining the volume (e.g. 10 - 50 mL). The bulk density significantly increased with a higher collagen concentration in the collagen dispersion prior to the freezing and dehydrating steps.

Collagen powder prepared according to the process of the present invention exhibited bulk density values of 20 - 30 mg/cm³ compared to collagen powders having a lower collagen concentration, which exhibited bulk density values of approximately 4 mg/cm³.

The relationship between the pH of the collagen dispersion, the concentration of the collagen dispersion; and the bulk density is shown in Figure 2. The bulk density appears to be influenced by the collagen concentration.

The present invention therefore provides a collagen powder having an improved bulk density, improved processing characteristics, and increased fluid uptake.

The process of preparation according to the present invention also provides a preparation process having improved efficiency by removing the amount of water that needs to be removed during the preparation process (the amount of water that needs to be removed in the process of preparation according to the present invention is approximately 30-fold greater than the mass of collagen compared to 200-fold greater than the mass of collagen of known methods). This allows reduction of process time and increased throughput.

## Claims

1. A process for preparing a collagen powder, the process comprising the steps of:
(a) providing a collagen source;
(b) adjusting the collagen source to a concentration of 1.5 - 4.0%;
(c) adjusting the collagen source to a pH of 2.9 - 5.2 by introducing a carboxylic acid to the collagen source;
(d) freezing the collagen source to a temperature of -33°C to -42°C;
(e) dehydrating the frozen collagen, comprising removing the aqueous phase by reducing the pressure to 5 Pa to 100 Pa (0.05 mbar to 1 mbar); and
(f) degrading the dehydrated collagen to a powder.

2. A process according to Claim 1, wherein the process comprises the additional step of mechanically degrading the collagen source prior to the freezing step (d).

3. A process according to Claim 1 or 2, wherein the collagen source is adjusted to an equivalent concentration of 1.5 - 4.0% (w/w) dry collagen.

4. A process according to any one of Claims 1-3, wherein the process comprises the step (c) of adjusting the collagen source to a pH of 3.5 - 5.0.

5. A process according to any one of Claims 1-4, wherein the pH-adjusting step (c) comprises introducing an acetic acid solution to the collagen source.

6. A process according to any one of Claims 1-5, wherein the concentration-adjusting step (b) and the pH-adjusting step (c) are conducted simultaneously by introducing an acid solution to the collagen source.

7. A process according to any one of Claims 1-5, wherein the concentration-adjusting step (b) is conducted for a period of not less than 0.5 hours.

8. A process according to any one of Claims 1-5, wherein the pH-adjusting step (c) is conducted for a period of 1-180 minutes.

9. A process according to any one of Claims 1-6, wherein the concentration-adjusting step (b) and the pH-adjusting step (c) are conducted simultaneously for a period of more than 1 minute.

10. A process according to any preceding claim, wherein the dehydrating step (e) comprises increasing the temperature to at least +30°C.

11. A process according to claim 10, wherein the dehydrating step (e) comprises increasing the temperature to at least +40°C.

12. A process according to any preceding claim, wherein the dehydrating step (e) comprises six equilibrating steps, each equilibrating step being conducted when the temperature is increased by 10°C.

13. A process according to any preceding claim, wherein the degrading step (f) comprises milling the dehydrated collagen to a powder using a mesh size of 1 mm.

14. A process according to any preceding claim, wherein the process comprises the step (c) of adjusting the collagen source to a pH of 3.5 - 4.3, optionally to a pH of 3.5.

15. A collagen powder, having a water absorbency of at least 20-fold of its dry weight and a bulk density of 20 - 30 mg/cm³.

16. The collagen powder according to claim 15, wherein the collagen powder has a particle size of less than 1 mm.

## Patentansprüche

1. Verfahren zur Herstellung eines Kollagenpulvers, wobei das Verfahren die folgenden Schritte umfasst:
(a) Vorsehen einer Kollagenquelle,
(b) Einstellen der Kollagenquelle auf eine Konzentration von 1,5 bis 4,0 %,
(c) Einstellen der Kollagenquelle durch Zufügen einer Karbonsäure zur Kollagenquelle auf einen pH von 2,9 bis 5,2,
(d) Tiefkühlen der Kollagenquelle auf eine Temperatur von -33 °C bis -42 °C,
(e) Dehydrieren des tiefgekühlten Kollagens, was das Entfernen der wässrigen Phase durch Reduzieren des Drucks auf 5 Pa bis 100 Pa (0,05 mbar bis 1 mbar) umfasst, und
(f) Zersetzen des dehydrierten Kollagens zu einem Pulver.

2. Verfahren nach Anspruch 1, wobei das Verfahren vor dem Schritt (d) des Tiefkühlens den zusätzlichen Schritt des mechanischen Zersetzens der Kollagenquelle umfasst.

3. Verfahren nach Anspruch 1 oder 2, wobei die Kollagenquelle auf eine Äquivalentkonzentration von 1,5 bis 4,0 Gew.-% trockenes Kollagen eingestellt wird.

4. Verfahren nach einem der Ansprüche 1 bis 3, wobei das Verfahren den Schritt (c) des Einstellens der Kollagenquelle auf einen pH von 3,5 bis 5,0 umfasst.

5. Verfahren nach einem der Ansprüche 1 bis 4, wobei der Schritt (c) des Einstellens des pHs das Zuführen einer Essigsäurelösung zur Kollagenquelle umfasst.

6. Verfahren nach einem der Ansprüche 1 bis 5, wobei der Schritt (b) des Einstellens der Konzentration und der Schritt (c) des Einstellens des pHs durch Zufügen einer Säurelösung zur Kollagenquelle gleichzeitig ausgeführt werden.

7. Verfahren nach einem der Ansprüche 1 bis 5, wobei der Schritt (b) des Einstellens der Konzentration über einen Zeitraum von nicht weniger als 0,5 Stunden ausgeführt wird.

8. Verfahren nach einem der Ansprüche 1 bis 5, wobei der Schritt (c) des Einstellens des pHs über einen Zeitraum von 1 bis 180 Minuten ausgeführt wird.

9. Verfahren nach einem der Ansprüche 1 bis 6, wobei der Schritt (b) des Einstellens der Konzentration und der Schritt (c) des Einstellens des pHs über einen Zeitraum von mehr als 1 Minute gleichzeitig ausgeführt werden.

10. Verfahren nach einem vorhergehenden Anspruch, wobei der Schritt (e) des Dehydrierens das Erhöhen der Temperatur auf mindestens +30 °C umfasst.

11. Verfahren nach Anspruch 10, wobei der Schritt (e) des Dehydrierens das Erhöhen der Temperatur auf mindestens +40 °C umfasst.

12. Verfahren nach einem vorhergehenden Anspruch, wobei der Schritt (e) des Dehydrierens sechs Ausgleichsschritte umfasst, wobei jeder Ausgleichsschritt ausgeführt wird, wenn die Temperatur um 10 °C erhöht wird.

13. Verfahren nach einem vorhergehenden Anspruch, wobei der Schritt (f) des Zersetzens das Mahlen des dehydrierten Kollagens zu einem Pulver unter Verwendung einer Maschenweite von 1 mm umfasst.

14. Verfahren nach einem vorhergehenden Anspruch, wobei das Verfahren den Schritt (c) des Einstellens der Kollagenquelle auf einen pH von 3,5 bis 4,3 umfasst, wahlweise auf einen pH von 3,5.

15. Kollagenpulver, welches eine Wasseraufnahmefähigkeit von mindestens dem 20-Fachen seines Trockengewichts und eine Rohdichte von 20 bis 30 mg/cm³ aufweist.

16. Kollagenpulver nach Anspruch 15, wobei das Kollagenpulver eine Partikelgröße von weniger als 1 mm aufweist.

## Revendications

1. Processus pour préparer une poudre de collagène, le processus comprenant les étapes consistant à :
(a) fournir une source de collagène ;
(b) ajuster la source de collagène à une concentration de 1,5 à 4,0 % ;
(c) ajuster la source de collagène à un pH de 2,9 à 5,2 en introduisant un acide carboxylique dans la source de collagène ;
(d) congeler la source de collagène à une température de -33 °C à -42 °C ;
(e) déshydrater le collagène congelé, comprenant l'enlèvement de la phase aqueuse en réduisant la pression à 5 Pa à 100 Pa (0,05 mbar à 1 mbar) ; et
(f) dégrader le collagène déshydraté en une poudre.

2. Processus selon la revendication 1, dans lequel le processus comprend l'étape supplémentaire consistant à dégrader mécaniquement la source de collagène avant l'étape de congélation (d).

3. Processus selon la revendication 1 ou 2, dans lequel la source de collagène est ajustée à une concentration équivalente de 1,5 à 4,0 % (M/M) de collagène sec.

4. Processus selon l'une quelconque des revendications précédentes 1 à 3, dans lequel le processus comprend l'étape (c) consistant à ajuster la source de collagène à un pH de 3,5 à 5,0.

5. Processus selon l'une quelconque des revendications 1 à 4, dans lequel l'étape d'ajustement de pH (c) comprend l'introduction d'une solution d'acide acétique dans la source de collagène.

6. Processus selon l'une quelconque des revendications 1 à 5, dans lequel l'étape d'ajustement de concentration (b) et l'étape d'ajustement de pH (c) sont menées simultanément en introduisant une solution d'acide dans la source de collagène.

7. Processus selon l'une quelconque des revendications 1 à 5, dans lequel l'étape d'ajustement de concentration (b) est menée pendant une durée non inférieure à 0,5 heure.

8. Processus selon l'une quelconque des revendications 1 à 5, dans lequel l'étape d'ajustement de pH (c) est menée pendant une durée de 1 à 180 minutes.

9. Processus selon l'une quelconque des revendications 1 à 6, dans lequel l'étape d'ajustement de concentration (b) et l'étape d'ajustement de pH (c) sont menées simultanément pendant une durée supérieure à 1 minute.

10. Processus selon l'une quelconque des revendications précédentes, dans lequel l'étape de déshydratation (e) comprend l'augmentation de la température jusqu'à au moins +30 °C.

11. Processus selon la revendication 10, dans lequel l'étape de déshydratation (e) comprend l'augmentation de la température jusqu'à au moins +40 °C.

12. Processus selon l'une quelconque des revendications précédentes, dans lequel l'étape de déshydratation (e) comprend six étapes d'équilibrage, chaque étape d'équilibrage étant menée lorsque la température est augmentée de 10 °C.

13. Processus selon l'une quelconque des revendications précédentes, dans lequel l'étape de dégradation (f) comprend le broyage du collagène déshydraté en une poudre en utilisant une taille de maille de 1 mm.

14. Processus selon l'une quelconque des revendications précédentes, dans lequel le processus comprend l'étape (c) d'ajustement de la source de collagène à un pH de 3,5 à 4,3, de manière facultative à un pH de 3,5.

15. Poudre de collagène, ayant un pouvoir d'absorption d'eau d'au moins 20 fois son poids à sec et une densité apparente de 20 à 30 mg/cm³.

16. Poudre de collagène selon la revendication 15, dans laquelle la poudre de collagène a une taille de particule inférieure à 1 mm.
